# EUROPÄISCHE PATENTANMELDUNG

(11) **EP 4 465 448 A1**
(43) Veröffentlichungstag der Anmeldung: **20.11.2024**
(21) Anmeldenummer: 24172529.0
(22) Anmeldetag: 25.04.2024
(51) Int. Cl.: H01R 11/12, H01R 13/00, B60L 53/18, H01B 7/42

(54) **TEMPERIERBARE STROMLEITUNGSVORRICHTUNG, VERFAHREN ZU DEREN HERSTELLUNG UND VERFAHREN ZUM TEMPERIEREN EINER STROMLEITUNG**

(30) Priorität: 17.05.2023 DE 102023113116
(71) Anmelder: Witzenmann GmbH, 75175 Pforzheim (DE)
(72) Erfinder: Ehrenberger, David, 75203 Königsbach-Stein (DE)
(74) Vertreter: LBP Lemcke, Brommer & Partner Patentanwälte mbB

(57) **Zusammenfassung**

Beschrieben wird eine temperierbare Stromleitungsvorrichtung (1), aufweisend: ein rohrförmiges Fluid-Leitungselement (2) aus einem elektrisch leitfähigen Werkstoff, insbesondere Metall, vorzugsweise Kupfer oder Aluminium einschließ-lich entsprechender Legierungen; wenigstens zwei Öffnungen (2a) des Fluid-Leitungselements (2), welche Öffnungen (2a) vorzugsweise an verschiedenen Enden des Fluid-Leitungselements (2) angeordnet sind; und einen Freiraum (3) innerhalb des Fluid-Leitungselements (2), welcher Freiraum (3) eine fluidleitende Verbindung zwischen den beiden Öffnungen (2a) schafft; welche Stromleitungs-vorrichtung (1) sich dadurch auszeichnet, dass in dem Fluid-Leitungselement (2) eine Litze (4) mit mehreren Litzendrähten, vorzugsweise aus Kupfer, geführt ist; der Freiraum (3) sich zumindest in Bereichen längs des Fluid-Leitungselements (2) um die Litze (4) herum erstreckt; und die Litze (4) oder die Litzendrähte in wenigstens einem Anschlussbereich an das Fluid-Leitungselement (2) angelegt ist bzw. sind, verzugsweise angepresst, oder umgekehrt. Weiterhin beschrieben werden ein Verfahren zur Herstellung einer temperierbaren Stromleitungsvorrich-tung (1) und ein Verfahren zum Temperieren einer Stromleitung.

## Beschreibung

Die Erfindung betrifft eine temperierbare Stromleitungsvorrichtung nach dem Oberbegriff des Anspruchs 1, aufweisend: ein rohrförmiges Fluid-Leitungselement aus einem elektrisch leitfähigen Werkstoff, insbesondere Metall, vorzugsweise Kupfer oder Aluminium einschließlich entsprechender Legierungen; wenigstens zwei Öffnungen des Fluid-Leitungselements, welche Öffnungen vorzugsweise an verschiedenen Enden des Fluid-Leitungselements angeordnet sind; und einen Freiraum innerhalb des Fluid-Leitungselements, welcher Freiraum eine fluidleitende Verbindung zwischen den beiden Öffnungen schafft.

Die Erfindung betrifft auch ein Verfahren zur Herstellung einer temperierbaren Stromleitungsvorrichtung sowie ein Verfahren zum Temperieren einer Stromleitung.

Elektromobilität wird heute oft als Maßnahme gegen den fortschreitenden Klimawandel gesehen. Zur Akzeptanzsteigerung von Elektrofahrzeugen ist es dabei erforderlich, die erforderlichen Ladezeiten zu verringern und die Reichweiten zu vergrößern. Hersteller wie Phoenix Contact bieten deshalb Gleichstrom (DC)-Schnelllade-Systeme an, die mit einer Ladeleistung von bis zu 350 kW einen Akku in zirka fünf Minuten für eine Reichweite von 100 km aufladen können.

Höhere Ladeströme bedingen jedoch eine höhere Erwärmung und damit eine thermische Belastung des eingesetzten Materials. Um diese zu reduzieren, könnte eine Erhöhung der Leiterquerschnitte in Erwägung gezogen werden, was allerdings Nachteile bei der Handhabbarkeit durch geringe Flexibilität und das höhere Gewicht des Ladekabels mit sich brächte. Aus diesem Grund werden bei vorbekannten Systemen die DC-Ladestecker mit einem Medium gekühlt.

Der Erfindung liegt demgegenüber die Aufgabe zugrunde, die erreichbare Kühlleistung bei solchen Systemen weiter zu verbessern.

Aus der WO 2021/259638 A1 sind rohrartige Verbinder zwischen Anschlüssen von Batteriezellen bekannt, die aus einem elektrisch leitfähigen Werkstoff bestehen, um die Batteriezellen elektrisch zu kontaktieren, und die zugleich als Fluid-Leitungselemente für ein Temperierfluid dienen, um die Batteriezellen zu temperieren.

Der Erfindung liegt demgegenüber die Aufgabe zugrunde, die erreichbare Stromleitung bei solchen Systemen weiter zu verbessern.

Außerdem bietet z.B. die Paul Druseidt Elektrotechnische Spezialfabrik GmbH & Co. KG wassergekühlte Hohlleiterkabel an, die in komplexer Weise aus einer Vielzahl von Einzelkomponenten hergestellt sind. Insbesondere bei der Konfektionierung ist dabei eine hohe Anzahl an Konfektionierungsschritten erforderlich. Zudem sind die verwendeten Teile größtenteils nur zerspanend herstellbar und damit nicht kostengünstig in größeren Stückzahlen für eine Massenproduktion verfügbar.

Der Erfindung liegt deshalb weiterhin die Aufgabe zugrunde, die Herstellung von temperierbaren Stromleitungsvorrichtungen zu vereinfachen und dadurch kostengünstiger sowie massentauglich zu machen.

Dies wird erfindungsgemäß erreicht durch eine temperierbare Stromleitungsvorrichtung mit den Merkmalen des Anspruchs 1, durch ein Verfahren zur Herstellung einer temperierbaren Stromleitungsvorrichtung gemäß Anspruch 11 und durch ein Verfahren zum Temperieren einer Stromleitung gemäß Anspruch 15.

Vorteilhafte Weiterbildungen sind in den jeweiligen Unteransprüchen definiert.

Eine erfindungsgemäße temperierbare Stromleitungsvorrichtung, aufweisend: ein rohrförmiges Fluid-Leitungselement aus einem elektrisch leitfähigen Werkstoff, insbesondere Metall, vorzugsweise Kupfer oder Aluminium einschließlich entsprechender Legierungen; wenigstens zwei Öffnungen des Fluid-Leitungselements, welche Öffnungen vorzugsweise an verschiedenen Enden des Fluid-Leitungselements angeordnet sind; und einen Freiraum innerhalb des Fluid-Leitungselements, welcher Freiraum eine fluidleitende Verbindung zwischen den beiden Öffnungen schafft, zeichnet sich dadurch aus, dass in dem Fluid-Leitungselement eine Litze mit mehreren Litzendrähten, vorzugsweise aus Kupfer, geführt ist; der Freiraum sich zumindest in Bereichen längs des Fluid-Leitungselements um die Litze herum erstreckt; und die Litze oder die Litzendrähte in wenigstens einem Anschlussbereich, vorzugsweise in jeweils einem Anschlussbereich an jedem Ende des Fluid-Leitungselements, an das Fluid-Leitungselement angelegt ist bzw. sind, verzugsweise angepresst, oder umgekehrt.

Unter einer Litze (englisch: "stranded wire") wird hier und im Folgenden, wie in der Elektrotechnik allgemein üblich, ein aus relativ dünnen Einzeldrähten (Litzendrähten) bestehender und daher leicht zu biegender elektrischer Leiter verstanden. Es wird überwiegend Kupfer als Leiter verwendet, ohne dass die Erfindung hierauf beschränkt wäre. Auch ist die Erfindung nicht hinsichtlich der Abmessungen (Querschnitte) der Litzendrähte beschränkt, so dass diese grundsätzlich auch in Form von gebogenen bzw. biegbaren (Kupfer-)Stäben ausgeführt sein können.

Die Formulierung "oder umgekehrt" bringt zum Ausdruck, dass es grundsätzlich keine Rolle spielt, ob die Litze an das Fluid-Leitungselement angelegt wird oder ob alternativ das Fluid-Leitungselement an die Litze angelegt wird.

Die Formulierung "um die Litze herum" kann auch beinhalten, dass der Freiraum zumindest lokal zwischen einzelnen Drähten oder Bündeln von Drähten der Litze oder sogar radial innenliegend befindlich ist, dass also die Litze um den Freiraum herum angeordnet ist. Letztendlich ist gemeint, dass die Litze von einem Temperierfluid quasi "umspült" werden kann.

Auf diese Weise fungieren das Fluid-Leitungselement und die Litze gemeinsam als Stromleiter, was es ermöglicht, bei gleichem Außendurchmesser der Vorrichtung den möglichen (Querschnitts-)Anteil an temperierbarem Stromleiter deutlich zu erhöhen. Das Temperierfluid umströmt die Litzendrähte innerhalb des Freiraums und temperiert dabei gleichzeitig auch das Fluid-Leitungselement als solches, wodurch sich eine verbesserte Kühlleistung ergibt.

Die temperierbare Stromleitungsvorrichtung ist mittels des erfindungsgemäßen Verfahrens einfach, kostengünstig und in Serienfertigung herstellbar. Das Verfahren zur Herstellung einer temperierbaren Stromleitungsvorrichtung beinhaltet die folgenden Schritte, von denen einige zwar vorteilhaft, dennoch aber nur optional sind:
a) Herstellen eines rohrförmigen Fluid-Leitungselements aus einem elektrisch leitfähigen Werkstoff, insbesondere Metall, vorzugsweise Kupfer oder Aluminium einschließlich entsprechender Legierungen, insbesondere indem zunächst durch Biegen oder Walzen von Blech ein Hohlkörper hergestellt wird, der dann an den Stößen verschweißt wird;
b) optional Ausbilden wenigstens eines gewellten Abschnitts des Fluid-Leitungselements, insbesondere durch Druckeinwirkung von außen oder von innen;
c) optional Reinigen des Fluid-Leitungselements;
d) optional Anbringen einer EMV-Abschirmung, insbesondere mit den Merkmalen gemäß einer weiter unten beschriebenen Ausgestaltung der erfindungsgemäßen Stromleitungsvorrichtung;
e) Ablängen des Fluid-Leitungselements einschließlich der optionalen EMV-Abschirmung (sofern vorhanden) auf eine gewünschte Länge;
f) Bereitstellen von wenigstens zwei Öffnungen in dem Fluid-Leitungselement, welche Öffnungen vorzugsweise an verschiedenen Enden des Fluid-Leitungselements angeordnet sind, höchst vorzugsweise durch Ausstanzen einer Wandung des Fluid-Leitungselements;
g) Einbringen einer Litze mit mehreren Litzendrähten, vorzugsweise aus Kupfer, deren Länge der gewünschten Länge in Schritt e) entspricht, in das Fluid-Leitungselement; und
h) Anlegen der Litze oder der Litzendrähte in wenigstens einem Anschlussbereich an das Fluid-Leitungselement, vorzugsweise in jeweils einem Anschlussbereich an jedem Ende des Fluid-Leitungselements, verzugsweise durch Anpressen, oder umgekehrt.

Ein erfindungsgemäßes Verfahren zum Temperieren einer Stromleitung, beinhaltet:
a) Bereitstellen einer erfindungsgemäßen Stromleitungsvorrichtung;
b) elektrisches Kontaktieren der Stromleitungsvorrichtung in dem Anschlussbereich, vorzugsweise in den beiden Anschlussbereichen;
c) Leiten eines Temperierfluids, insbesondere Luft oder ein dielektrisches Öl, durch das Fluid-Leitungselement über die Öffnungen, also durch eine Öffnung hinein und durch die andere Öffnung wieder hinaus.

Es wird im Rahmen von Ausgestaltungen der Erfindung vorgeschlagen, eine elektrisch leitende, insbesondere flexible Verbindung (die genannte Stromleitungsvorrichtung) zu schaffen, die ein vorzugsweise gewelltes Rohr (das genannte Fluid-Leitungselement) umfasst, welches Rohr leitfähige Litzendrähte umhüllt und zusätzlich von einem Temperierfluid durchströmt werden kann.

Die Wellung, sofern vorhanden, kann dabei partiell erfolgen, also auf Rohrabschnitte beschränkt sein, und kann sowohl konzentrisch ringgewellt als auch wendelgewellt ausgebildet sein. Dabei sind - ausgehend von einem glatten Rohr - sowohl Wellen, die den Durchmesser erhöhen, als auch Wellen, die den Durchmesser verringern (vorzugsweise herstellbar durch hydraulisches bzw. mechanisches Umformen) sowie eine Kombination beider Wellenarten möglich.

Das Rohr ist erfindungsgemäß aus einem elektrisch gut leitfähigen Werkstoff hergestellt, beispielsweise Kupfer, höchst vorzugsweise aus einer Aluminium- oder Kupferlegierung.

Das Rohr kann insbesondere nicht runde Querschnitte aufweisen, ggf. nur in Teilabschnitten, um beispielsweise mit Blick auf eine spätere Verwendung Engstellen im Bauraum begegnen zu können.

Endständig wird das Rohr vorzugsweise dazu genutzt, die Litze bzw. die einzelnen Litzendrähte zu verpressen und auf diese Weise ohne zusätzliches Bauteil einen (Press-)Kabelschuh auszubilden. Der so gebildete Kabelschuh kann optional mit einer Ausnehmung (Durchbruch) ausgestattet werden, um eine elektrische Anschlussverbindung durch Verspannen, vorzugsweise durch Schrauben, herzustellen, welche eine ausreichende Kontaktfläche für die Übertragung des elektrischen Stroms schafft.

Bei bzw. vor der genannten Verpressung kann das Rohr lokal geschnitten oder anderweitig im Bereich seiner Wandung geöffnet werden, z.B. gestanzt, sodass sich eine Öffnung zum Einkuppeln eines Fluidmassenstroms (des Temperierfluids) in das Rohr ergibt. In Kombination mit der Verwendung von (Druck-)Luft als Temperierfluid ergibt sich hierbei eine einfache und besonders vorteilhafte Variante.

Bevorzugt ist das Rohr an seinen beiden Enden gleichartig ausgebildet, also z.B. verpresst und mit einer zusätzlichen Öffnung zum Einkoppeln bzw. Auskoppeln des Temperierfluids versehen.

Die vorstehend beschriebene Vorrichtung zeichnet sich dadurch aus, dass sie größtenteils besonders kostengünstig endlos gefertigt werden kann.

Folgende Verfahrensschritte können in flexibler Kombination bei der Herstellung aufeinander folgen:
- Rohrschweißen (Herstellung des Rohrs durch Längsnaht-Schweißen), insbesondere mit bereits eingelegter Litze;
- Verpressen von Rohr und Litze, vorzugsweise in bestimmten Bereichen;
- mechanisches Wellen und dabei Stauchen der gestreckten Litze für Flexibilität;
- Anbringen, z.B. durch Extrudieren, einer Innenisolierung des Rohres;
- Anbringung einer äußeren Wickel- und/oder Geflechtabschirmung (EMV-Abschirmung);
- Anbringen, z.B. durch Extrudieren, einer Außenisolierung;
- Trennen (Ablängen) der Vorrichtung;
- endständiges Einkürzen von Isolierung und Abschirmung;
- optional Montage eines Kabeldurchführungselements mit Abschirmungskontaktierung, z.B. für den Anschluss an ein Gehäuse oder dgl.

Die Verpressung kann ggf. auch nach Isolierung und Trennung erfolgen, sofern die geforderte Flexibilität der Anordnung dies noch zulässt.

Eine Variante der Erfindung weist endständig ein zusätzliches Element zur Fluideinkopplung auf, welches es ermöglicht, eine Temperierfluid-Zuleitung dichtend anzubringen. Insbesondere für flüssige Temperierfluide erschient diese Variante vorteilhaft. Hierbei ist die endständige Verpressung von Rohr und Litze fluiddicht abzudichten, was vorzugsweise über ein stoffschlüssiges Verfahren, wie Löten oder Schweißen, erfolgen kann. Zusätzlich oder alternativ kann auch durch eine gesteigerte Verpressung von geeigneten Werkstoffpaarungen für Rohr und Litze eine hinreichend dichte Verbindung hergestellt werden. Ein stoffschlüssiger Fügeprozess entfällt dann. Besonders bevorzugt sind in diesem Kontext weiche, elektrisch leitende Werkstoffe, insbesondere reines Kupfer.

Zusätzlich kann ein Fließelement die Abdichtung durch Verpressung unterstützen, welches unter Druck in die Zwischenräume der Litze fließt und selbige gegenüber dem umgeformten Rohrelement abdichtet. Insbesondere kann es vorteilhaft sein, einen weiteren weichen elektrisch leitenden Werkstoff einzubringen, z.B. relativ weiche Metalle oder elektrisch leitende Klebstoffe. Eine mögliche Alternative ist das Einbringen eines zusätzlichen (Kupfer-)Lots.

Das zusätzliche Element zur Fluideinkopplung kann vorzugsweise umformend, höchst vorzugsweise durch eine Aushalsung oder durch Fließlochformen, hergestellt werden.

Darüber hinaus ist im Hinblick auf Kosten, Flexibilität und Lebensdauer eine Variante der beschriebenen Erfindung vorteilhaft, welche nicht ein einziges, durchgängiges Rohrelement (rohrförmiges Fluid-Leitungselement), sondern mehrere zusammengesetzte Rohrsegmente aufweist. Die endständigen Rohrsegmente bilden dann die bereits erwähnten Kabelschuhe und stellen eine mechanisch ausreichend feste und steife Struktur dar, sodass eine Kabeldurchführung mit Schirmungskontaktierung montiert werden und weiterhin ein Temperierfluid durch einen Durchgang die Litze temperieren kann. Hierbei erfüllt die oben erwähnte innere Isolierung oder Isolierungsschicht (insbesondere der EMV-Abschirmung) vorzugsweise zusätzlich die Funktion einer Fluid-Abdichtung.

Die Isolierung kann ggf. mit einem zusätzlichen Verpresselement auf dem betreffenden Rohrsegment fixiert werden. Vorzugsweise ist dieses Verpresselement Teil der Kabeldurchführung, beispielsweise kann es sich um einen Verpressring der Abschirmung handeln.

Eine weitere Variante beinhaltet, dass die endständige Verpressung so ausgeführt wird, dass eine Ausnehmung (ein Durchbruch) beispielweise durch einen beim Verpressen der Rohrenden mit der Litze integrierten Stanzprozess in das flachgepresste Rohrende eingebracht wird, um einen Arbeitsschritt einzusparen. Mit Hilfe der Ausnehmung kann anschließend eine Verspannung (Verbindung) der Leitung mit einem elektrischen Anschluss erfolgen, vorzugsweise durch Verschrauben.

Bei einer Ausgestaltung zur Einkopplung eines flüssiges Temperierfluids kann ein zusätzliches Einkoppelelement (EKE; auch: Verbindungselement) verwendet werden, welches das Rohr fluiddicht kontaktiert und eine Schnittstelle zur Fluidversorgung darstellt. Dieses Verbindungselement ist vorzugsweise aus Kunststoff hergestellt, um eine elektrische Isolation zwischen Rohr und Fluidversorgung darzustellen. Vorzugsweise erfolgt die Herstellung des Verbindungselements im Mehrkomponentenspritzguss, um ein Dichtelement integrieren zu können.

Das EKE kann zusätzlich so ausgeführt sein, dass eine Schnappfunktion integriert ist, die nach der Montage optional mit einem zusätzlichen Teil hintersichert werden kann, um dem Fluiddruck im Betrieb und Beschleunigungen bzw. Massenkräften während der Montage Stand zu halten.

Das EKE kann zusätzlich die Funktion eines Berührschutzes von spannungsbehafteten Teilen übernehmen.

Folgende Weiterbildungen der erfindungsgemäßen Stromleitungsvorrichtung haben sich in der Praxis als besonders vorteilhaft erwiesen:
Bei einer Ausgestaltung der erfindungsgemäßen Stromleitungsvorrichtung weist die Litze eine Länge auf, die einer Länge des Fluid-Leitungselements im Wesentlichen entspricht.

Auf diese Weise erhält man eine kompakte Ausführungsform, bei der insbesondere die Litze durch einfaches Verpressen der Enden des Fluid-Leitungselements relativ zu diesem festgelegt werden kann.

Bei einer anderen Ausgestaltung der erfindungsgemäßen Stromleitungsvorrichtung ist wenigstens ein Ende des Fluid-Leitungselements, vorzugsweise beiden Enden, zusammen mit der Litze flachgepresst (verpresst), vorzugsweise nach Art eines (Press-)Kabelschuhs, und weist höchst vorzugsweise einen Durchbruch zum Ausbilden einer Schraubanbindung an ein spannungsführendes Bauteil auf.

Hierauf und auf die besonderen Vorteile dieser Bauform wurde weiter oben schon wiederholt eingegangen.

Bei noch einer Ausgestaltung der erfindungsgemäßen Stromleitungsvorrichtung sind das Fluid-Leitungselement und die Litze an dem genannten Ende bzw. den Enden zusätzlich stoffschlüssig verbunden, insbesondere geschweißt, gelötet oder geklebt.

Hierdurch kann insbesondere eine Fluiddichtheit in diesem Bereich erreicht werden, worauf ebenfalls schon hingewiesen wurde.

Bei wieder einer Ausgestaltung der erfindungsgemäßen Stromleitungsvorrichtung ist wenigstens eine der Öffnungen in einer Wandung des Fluid-Leitungselements in einem Übergangsbereich angeordnet, welcher Übergangsbereich zwischen dem flachgepressten Ende und einem unverformten Bereich des Fluid-Leitungselements angeordnet ist.

Auf diese Weise kann die Öffnung mit ihrer Öffnungsfläche (durch einen Rand der Öffnung umschriebene Fläche) schräg zu einer Längserstreckungsrichtung des Fluid-Leitungselements orientiert sein, was insbesondere ein Einblasen von Druckluft als Temperiermedium erleichtern kann.

Bei einer anderen Ausgestaltung der erfindungsgemäßen Stromleitungsvorrichtung ist wenigstens eine der Öffnungen in einer Wandung des Fluid-Leitungselements in einem unverformten Bereich des Fluid-Leitungselements angeordnet.

Dies kann eine Anordnung des weiter oben bereits erwähnten EKE erleichtern.

Bei einer wieder anderen Ausgestaltung der erfindungsgemäßen Stromleitungsvorrichtung ist entsprechend an der wenigstens einen Öffnung ein Verbindungselement bzw. EKE zum (fluiddichten) Anschließen einer Temperierfluid-Leitung angeordnet, vorzugsweise in Form eines sattelförmigen Verbindungsteils mit abgewinkeltem Anschlussteil, welches Anschlussteil sich bevorzugt zumindest lokal parallel zu dem Fluid-Leitungselement erstreckt.

Auf das Anschlussteil kann dann beispielsweise eine Fluid-(Schlauch-)Leitung für ein Temperierfluid einfach aufgeschoben werden.

Bei noch einer anderen Ausgestaltung der erfindungsgemäßen Stromleitungsvorrichtung ist das Fluid-Leitungselement an wenigstens einem Ende als normierter Fluid-Anschlussstutzen, insbesondere VDA-Anschlussstutzen, ausgebildet, wobei eine Mündung des Anschlussstutzens eine betreffende Öffnung des Fluid-Leitungselements bildet.

Somit kann das Fluid-Leitungselement ohne Weiteres axial fluidleitend mit einer weiteren Fluidleitung zum Zuführen oder Abführen des Temperierfluids verbunden werden.

Bei wieder einer anderen Ausgestaltung der erfindungsgemäßen Stromleitungsvorrichtung ist die Litze oder sind die Litzendrähte im Bereich des Fluid-Anschlussstutzens an eine Innenseite des Fluid-Leitungselements angelegt, vorzugsweise mittels eines in das Fluid-Leitungselement eingeführten Spannrings.

Vorzugsweise erfolgt dann in diesem Bereich von außen der Stromanschluss, wobei im Inneren des Fluid-Leitungselements, vorzugsweise innerhalb des Spannrings, eine Durchleitung für das Temperierfluid freibleibt.

Bei einer wieder anderen Ausgestaltung der erfindungsgemäßen Stromleitungsvorrichtung ist zwischen dem Fluid-Leitungselement und der Litze wenigstens ein Abstandhalter angeordnet, vorzugsweise ein ringförmiger Abstandhalter mit umfänglich beabstandeten Vorsprüngen.

Dadurch wird für eine sichere Durchströmung des Fluid-Leitungselements und eine sichere Umströmung der Litze mit dem Temperierfluid gesorgt.

Bei einer anderen Ausgestaltung der erfindungsgemäßen Stromleitungsvorrichtung sind die Litzendrähte in wenigstens einem Abschnitt miteinander verbunden, vorzugsweise stoffschlüssig, sodass die Litze in dem Abschnitt einen verringerten Querschnitt aufweist, und das Fluid-Leitungselement ist in dem genannten Abschnitt an mehreren, in Umfangsrichtung voneinander beabstandeten Positionen, vorzugsweise mindestens drei gleichmäßig voneinander beabstandeten Positionen, gegen die Litze verpresst, wobei höchst vorzugsweise Fluid-Leitungselement und Litze bei den genannten Positionen zusätzlich stoffschlüssig verbunden sind.

Auf diese Weise lässt sich sicherstellen, eine sichere Durchströmung des Fluid-Leitungselements und eine sichere Umströmung der Litze mit dem Temperierfluid erfolgt.

Bei noch einer anderen Ausgestaltung der erfindungsgemäßen Stromleitungsvorrichtung sind die Litzendrähte an wenigstens einem ringförmigen Halteelement gehalten, das bei einer axialen Position in das Fluid-Leitungselement eingesetzt ist und sich an mehreren Stellen von innen an dem Fluid-Leitungselement abstützt, welches Halteelement einen zentralen Durchbruch zur Fluiddurchleitung und vorzugsweise an seiner Außenseite eine Mehrzahl von Aufnahmen für einzelne Litzendrähte oder Bündel von Litzendrähten aufweist.

Auch auf diese Weise lässt sich sicherstellen, eine sichere Durchströmung des Fluid-Leitungselements und eine sichere Umströmung der Litze mit dem Temperierfluid erfolgt.

Bei wieder einer anderen Ausgestaltung der erfindungsgemäßen Stromleitungsvorrichtung ist in dem Fluid-Leitungselement in einem Bereich ein elastisches Element eingesetzt, welches Element lokal eine Kraft nach außen gegen eine Innenseite des Fluid-Leitungselements ausübt und die Litzendrähte an der Innenseite in Anlage bringt.

Dadurch wird zusätzlich oder alternativ für eine sichere Durchströmung des Fluid-Leitungselements und eine sichere Umströmung der Litze mit dem Temperierfluid gesorgt.

In Weiterbildung dieser Idee kann noch vorgesehen sein, dass das elastische Element aus einer Formgedächtnislegierung besteht oder als Geflechthülse aus Federstahl ausgebildet ist, vorzugsweise nach Art eines Stents bzw. einer Gefäßstütze, wie sie aus der Medizin grundsätzlich bekannt ist.

Um speziell bei Ladevorgängen entstehende EM-Strahlung abschirmen zu können, ist bei einer bevorzugten Ausgestaltung das Fluid-Leitungselement zumindest abschnittweise, bevorzugt in einem Abschnitt zwischen den beiden Öffnungen, von einer elektromagnetisch wirksamen (EMV-)Abschirmung umgeben, welche Abschirmung vorzugsweise umfasst: eine erste elektrische Isolierumhüllung, die außen auf dem Fluid-Leitungselement angeordnet ist; eine EMV-Abschirmschicht, insbesondere aus einem Metallgeflecht; und eine zweite elektrische Isolierumhüllung, die außen auf der EMV-Abschirmschicht angeordnet ist.

Außerdem kann vorgesehen sein, dass außen an dem Fluid-Leitungselement (speziell auf der ersten Isolierumhüllung, ein Kabeldurchführungselement angebracht ist, welches die Abschirmung kontaktiert, z.B. für den Anschluss an ein Gehäuse oder dgl.

Es wurde schon erwähnt, dass bei einer besonders vorteilhaften Weiterbildung der erfindungsgemäßen Stromleitungsvorrichtung das Fluid-Leitungselement zumindest in einem Abschnitt flexibel ausgebildet ist, insbesondere gewellt, vorzugsweise ringgewellt oder wendelgewellt.

So lässt sich die Vorrichtung auch an beengte Bauräume anpassen.

Eine Weiterbildung des erfindungsgemäßen Verfahrens sieht vor, dass das Einbringen der Litze in Schritt g) erfolgt entweder g`) durch Einlegen der Litze in das Fluid-Leitungselement bei dessen Herstellung in Schritt a) und gemeinsames Ablängen in Schritt e) oder g") durch Bereitstellen eines Litzenabschnitts mit einer Länge, die doppelt so groß ist wie die Länge des Fluid-Leitungselements in Schritt e), Ergreifen des Litzenabschnitts bei einem Ergreifpunkt in seiner Mitte und Einbringen des Litzenabschnitts in das Fluid-Leitungselement durch ein offenes Ende desselben beginnend mit dem Ergreifpunkt.

Beide Ansätze vermeiden die technische Schwierigkeit, ein hinreichend dickes Litzendrahtbündel in ein langes Rohrleitungselement einführen zu müssen.

Eine andere Weiterbildung des erfindungsgemäßen Verfahrens sieht vor, dass wenigstens ein Ende des Fluid-Leitungselements zusammen mit der Litze flachgepresst wird, vorzugsweise zur Herstellung einer Art (Press-)Kabelschuh, und höchst vorzugsweise in dem flachgepressten Ende ein Durchbruch zum Ausbilden einer Schraubanbindung ausgebildet wird.

Auf die Eigenschaften und Vorteile dieser Konstruktion wurde weiter oben bereits hingewiesen. Wenn das Verpressen und das Ausbilden des Durchbruchs in einem Arbeitsschritt erfolgt, lässt sich entsprechend Prozesszeit und -Aufwand einsparen.

Eine wieder andere Weiterbildung des erfindungsgemäßen Verfahrens sieht vor, dass das Fluid-Leitungselements und die Litze im Bereich des flachgepressten Endes zusätzlich stoffschlüssig miteinander verbunden werden, insbesondere geschweißt, gelötet oder geklebt.

Auch auf die Eigenschaften und Vorteile dieser Konstruktion wurde weiter oben bereits hingewiesen. Insbesondere kann so ein fluiddichter Abschluss erreicht werden.

Noch eine andere Weiterbildung des erfindungsgemäßen Verfahrens sieht vor, dass an wenigstens einer der Öffnungen ein Verbindungselement (oder EKE) zum Anschließen einer Temperierfluid-Leitung angeordnet wird, vorzugsweise in Form eines sattelförmigen Verbindungsteils mit abgewinkeltem Anschlussteil, welches Anschlussteil sich bevorzugt zumindest lokal parallel zu dem Fluid-Leitungselement erstreckt.

Auch auf die Eigenschaften und Vorteile dieser Konstruktion wurde weiter oben bereits hingewiesen. Insbesondere kann so ein fluiddichter Anschluss an ein äu-ßeres Fluidleitungssystem erreicht werden. Außerdem kann das EKE bei Fertigung aus Kunststoff elektrisch isolierend wirken.

Schließlich sieht noch eine andere Weiterbildung des erfindungsgemäßen Verfahrens vor, dass die Litzendrähte, insbesondere vor dem Einbringen in das Fluid-Leitungselement in wenigstens einem Abschnitt miteinander verbunden werden, vorzugsweise stoffschlüssig, sodass die Litze in dem Abschnitt einen verringerten Querschnitt aufweist, und bei der das Fluid-Leitungselement nach dem Einbringen der Litze in dem genannten Abschnitt an mehreren, in Umfangsrichtung voneinander beabstandeten Positionen, vorzugsweise an mindestens drei gleichmäßig voneinander beabstandeten Positionen, gegen die Litze verpresst wird, wobei höchst vorzugsweise Fluid-Leitungselement und Litze bei den genannten Positionen zusätzlich stoffschlüssig verbunden werden.

Auch diese Ausgestaltung wurde oben schon detailliert beschrieben. Durch das vorherige Verbinden der Litzendrähte ist sichergestellt, dass diese sich beim lokalen Verpressen des Leitungselements gegen die Litze nicht auffächern und beschädigt werden.

In Weiterbildung des erfindungsgemäßen Verfahrens zum Temperieren einer Stromleitung kann noch vorgesehen sein, dass das Temperierfluid in Form von (Druck-)Luft oder einem anderen Gas unmittelbar durch die Öffnungen, insbesondere durch wenigstens eine Öffnung in dem genannten Übergangsbereich des Fluid-Leitungselements, in das Fluid-Leitungselement eingeleitet (eingeblasen) und aus dem Fluid-Leitungselement ausgeleitet wird.

Eine besondere Abdichtung ist hierbei grundsätzlich nicht erforderlich, sodass sich eine besonders einfache Ausgestaltung ergibt.

In Weiterbildung des erfindungsgemäßen Verfahrens zum Temperieren einer Stromleitung kann außerdem noch vorgesehen sein, dass eine Temperierfluid-Leitung mit einem insbesondere flüssigen Temperierfluid, z.B. Öl, an das Verbindungselement angeschlossen und das Temperierfluid durch das Verbindungselement in das Fluid-Leitungselement eingeleitet oder aus dem Fluid-Leitungselement ausgeleitet wird.

Die Temperierleistung kann so deutlich erhöht werden.

In diesem Zusammenhang kommt bevorzugt eine der o.g. Ausgestaltungen mit EKE zum Einsatz, um das flüssige Temperierfluid in das Fluid-Leitungselement einzuleiten bzw. aus dem Fluid-Leitungselement auszuleiten.

Weitere Eigenschaften und Vorteile der Erfindungen ergeben sich aus der nachfolgenden Beschreibung von Ausführungsbeispielen anhand der Zeichnung.
Figur 1 zeigt perspektivisch eine erste Ausgestaltung der erfindungsgemäßen Strom leitungsvorrichtung;
Figur 2 zeigt einen Schnitt durch die Ausgestaltung in Figur 1;
Figur 3 zeigt perspektivisch eine zweite Ausgestaltung der erfindungsgemäßen Strom leitungsvorrichtung;
Figur 4 zeigt einen Schnitt durch die Ausgestaltung in Figur 2;
Figur 5 zeigt einen Schichtaufbau der erfindungsgemäßen Stromleitungsvorrichtung im Detail;
Figur 6 zeigt Schritte des erfindungsgemäßen Herstellungsverfahrens;
Figuren 7 und 8 zeigen den Medienfluss bei der Ausgestaltung der erfindungsgemäßen Stromleitungsvorrichtung gemäß Figur 1;
Figuren 9 und 10 zeigen den Medienfluss bei der Ausgestaltung der erfindungsgemäßen Stromleitungsvorrichtung gemäß Figur 3;
Figur 11 zeigt Schnittansichten einer alternativen Ausgestaltung der erfindungsgemäßen Stromleitungsvorrichtung;
Figur 12 zeigt Schnittansichten einer ersten Ausgestaltung zur Lokalisierung der Litze bei einer erfindungsgemäßen Stromleitungsvorrichtung;
Figur 13 zeigt Schnittansichten einer zweiten Ausgestaltung zur Lokalisierung der Litze bei einer erfindungsgemäßen Stromleitungsvorrichtung;
Figur 14 zeigt Schnittansichten einer dritten Ausgestaltung zur Lokalisierung der Litze bei einer erfindungsgemäßen Stromleitungsvorrichtung; und
Figur 15 zeigt Schnittansichten einer vierten Ausgestaltung zur Lokalisierung der Litze bei einer erfindungsgemäßen Stromleitungsvorrichtung.

In den Figuren bezeichnen gleiche Bezugszeichen jeweils gleiche oder gleichwirkende Elemente.

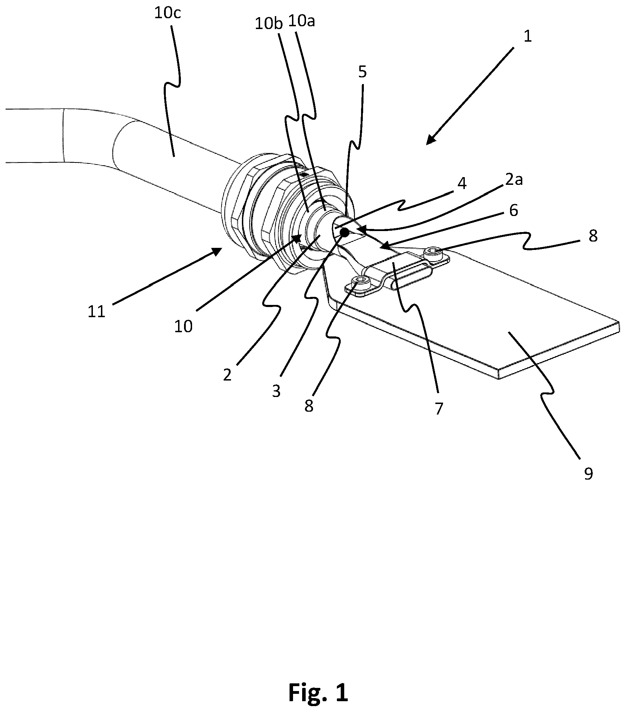

Figur 1 zeigt in einer perspektivischen Darstellung ein Ende bzw. einen Anschlussbereich einer erfindungsgemäßen temperierbare Stromleitungsvorrichtung, die insgesamt mit dem Bezugszeichen 1 bezeichnet ist. Sie umfasst ein rohrförmiges Fluid-Leitungselement (oder einfach Rohr) 2 aus einem elektrisch leitfähigen Werkstoff, insbesondere Metall, vorzugsweise Kupfer oder Aluminium einschließlich entsprechender Legierungen, welches Rohr 2 wenigstens zwei Öffnungen aufweist, von denen aufgrund der gewählten Darstellung nur eine bei Bezugszeichen 2a zu erkennen ist. Die Öffnungen sind vorzugsweise an den verschiedenen Enden des Fluid-Leitungselements 2 angeordnet. Innerhalb des Fluid-Leitungselements 2 befindet sich ein einen Freiraum 3, welcher Freiraum 3 eine fluidleitende Verbindung zwischen den beiden Öffnungen, also der Öffnung 2a und der weiteren Öffnung am anderen Ende der Anordnung, schafft.

In dem Fluid-Leitungselement 2 ist eine Litze 4 mit mehreren Litzendrähten (nicht einzeln dargestellt), vorzugsweise aus Kupfer, geführt, wobei der Freiraum 3 sich zumindest in Bereichen längs des Fluid-Leitungselements 2 um die Litze 4 herum erstreckt, wie im Folgende noch gezeigt wird. Die Litze 4 oder die Litzendrähte ist bzw. sind in dem gezeigten Anschlussbereich und vorzugsweise in beiden Anschlussbereichen an den Enden des Fluid-Leitungselements 2 an das Fluid-Leitungselement 2 angelegt, d.h. an dessen (Innen-) Wandung, verzugsweise angepresst, oder umgekehrt.

Gemäß der Ausgestaltung in Figur 1 weist dazu zumindest das gezeigte Ende des Fluid-Leitungselements 2 (und vorzugsweise auch das andere, nicht gezeigte Ende) bei Bezugszeichen 5 einen Einschnitt auf und ist im Anschluss zusammen mit der Litze 4 nach Art eines Presskabelschuhs 6 endständig flachgepresst. Der Presskabelschuh 6 ist mittels einer Lasche 7 und zwei Schrauben 8 auf einer Anschlussplatte 9 fixiert, die als mit einer Stromquelle in Verbindung steht (nicht gezeigt) oder stehen kann. Durch die durch den Einschnitt 5 gebildeten Öffnung 2a kann ein Temperierfluid, vorzugsweise (Druck-)Luft in das Fluid-Leitungselement 2 eingebracht werden, um dieses und die Litze 4 zu temperieren, insbesondere zu kühlen. Bevorzugt wird das Temperierfluid durch eine entsprechende Öffnung am anderen Ende der Anordnung wieder ausgeleitet. Wenigstens eine der Öffnungen ist gemäß Figur 1 in einer Wandung des Fluid-Leitungselements 2 in einem Übergangsbereich angeordnet, welcher Übergangsbereich zwischen dem flachgepressten Ende (dem Kabelschuh 6) und einem unverformten Bereich des Fluid-Leitungselements 2 angeordnet ist.

Das Fluid-Leitungselement 2 und die Litze 4 können, zusätzlich zu der Verpressung, an dem gezeigten bzw. an dem anderen Ende zusätzlich noch stoffschlüssig verbunden sind, insbesondere geschweißt, gelötet oder geklebt.

Figur 1 zeigt noch weitere Komponenten der erfindungsgemäßen Stromleitungsvorrichtung 1, nämlich eine das Fluid-Leitungselement 2 zumindest abschnittweise, bevorzugt in einem Abschnitt zwischen den beiden Öffnungen, umgebende, elektromagnetisch wirksame EMV-Abschirmung 10, welche Abschirmung eine erste, innere elektrische Isolierumhüllung 10a, die außen direkt auf dem Fluid-Leitungselement 2 angeordnet ist, eine EMV-Abschirmschicht 10b, insbesondere aus einem Metallgeflecht, die auf der Isolierumhüllung 10a angebracht ist, und eine zweite elektrische Isolierumhüllung 10c, die außen auf der EMV-Abschirmschicht 10b angeordnet ist, umfasst. Bezugszeichen 11 bezeichnet ein schraubbares, mehrteiliges Kabeldurchführungselement, welches die EMV-Abschirmschicht 10b elektrisch leitend kontaktiert (in Figur 1 nicht erkennbar), um eine Anschlussmöglichkeit an ein Gehäuse oder dgl. (in Figur 1 nicht gezeigt) bereitzustellen.

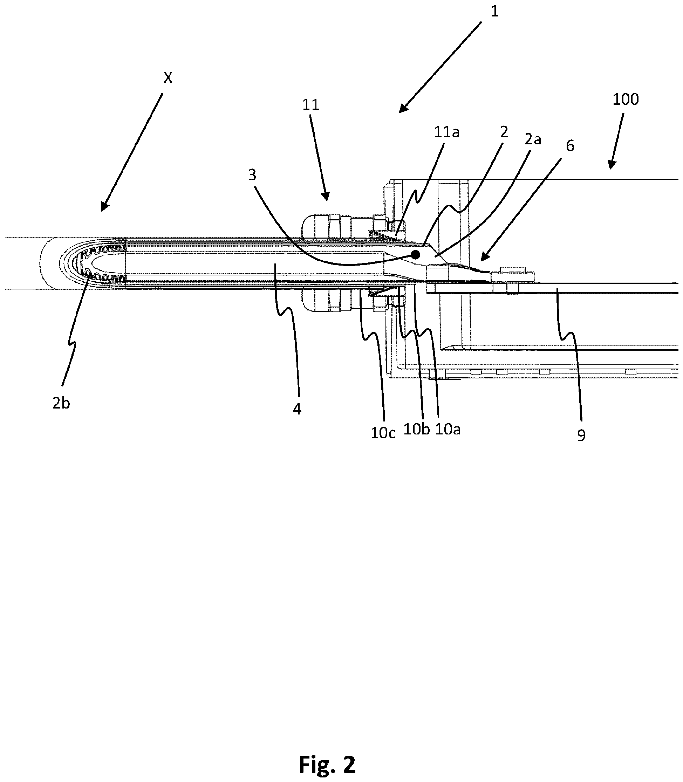

Figur 2 zeigt die Anordnung aus Figur 1 in einem Längsschnitt. Hier ist nun auch das oben bereits erwähnte Gehäuse 100 gezeigt, durch welches die Stromleitungsvorrichtung 1 geführt ist. Auch der erwähnte mehrteilige Aufbau des Kabeldurchführungselements 11 ist teilweise erkennbar, speziell eine abgeschrägtes Einschraubteil 11a, welches die Abschirmung 10b kontaktiert. Das Kabeldurchführungselement 11 ist als solches nicht Bestandteil der vorliegenden Patentanmeldung.

Weiterhin entnimmt man der Figur 2, dass das Rohr 2 in einem Abschnitt (bei Bezugszeichen X) gebogen und zugleich gewellt mit einer Wellung 2b ausgebildet ist, um entsprechende Flexibilität zu erreichen. Die Wellung 2b kann eine Ringwellung oder eine Wendelwellung sein, wobei Letztere aus Fertigungsgründen bevorzugt sein kann.

Die Litze 4 ist zentral innerhalb des Rohes 2 geführt, worauf weiter unten noch genauer eingegangen wird.

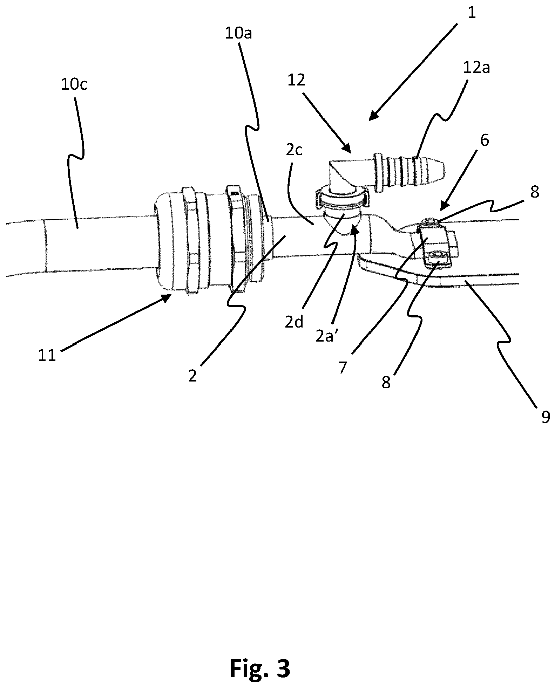

In der Figur 3 ist eine Variante der erfindungsgemäßen Stromleitungsvorrichtung 1 gezeigt; es soll hier nur auf die wesentlichen Abweichungen zu der Ausgestaltung in Figur 1 näher eingegangen werden.

Gemäß Figur 3 weist die Stromleitungsvorrichtung 1 wenigstens eine Öffnung in einer Wandung 2c des Fluid-Leitungselements 2 auf, welche Öffnung bei Bezugszeichen 2a' in einem unverformten Bereich des Fluid-Leitungselements 2 angeordnet ist und rechtwinklig zu einer Längsachse des Fluid-Leitungselements 2 abzweigt. An dieser Öffnung 2a' ist ein Verbindungselement 12 zum Anschließen einer Temperierfluid-Leitung (nicht gezeigt) angeordnet, welches Verbindungselement 12 ein abgewinkeltes Anschlussteil 12a aufweist, welches Anschlussteil 12a sich zumindest in dem gezeigten Bereich parallel zu dem Fluid-Leitungselement 2 erstreckt.

Das Verbindungselement 12 kann insbesondere an einer Aushalsung oder einem Sattelstutzen 2d des Fluid-Leitungselements 2 (lösbar) befestigt sein, z.B. mittels des gezeigten Schnappmechanismus mit optionaler zusätzlicher Sicherung. Die Erfindung ist diesbezüglich nicht beschränkt.

Die Litze ist in Figur 3 nicht sichtbar, da sie komplett von dem Rohr 2 umhüllt ist. Die Pressverbindung bei Bezugszeichen 6 ist bevorzugt fluiddicht ausgebildet, worauf schon hingewiesen wurde.

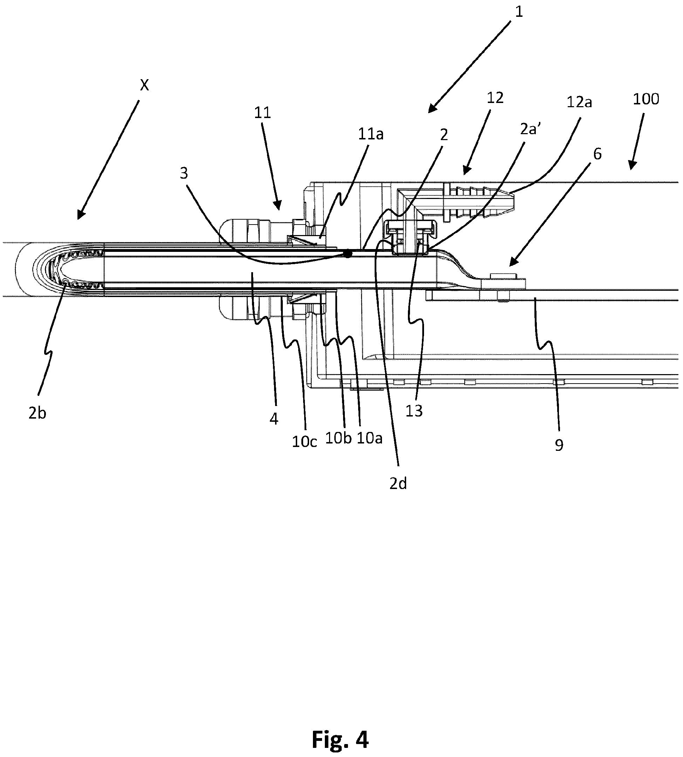

Figur 4 zeigt einen Schnitt analog Figur 2 durch die Anordnung in Figur 3. Zu erkennen ist insbesondere im Verbindungsbereich von Sattelstutzen 2d und Verbindungselement 12 noch eine Dichtung 13, die angespritzt sein kann.

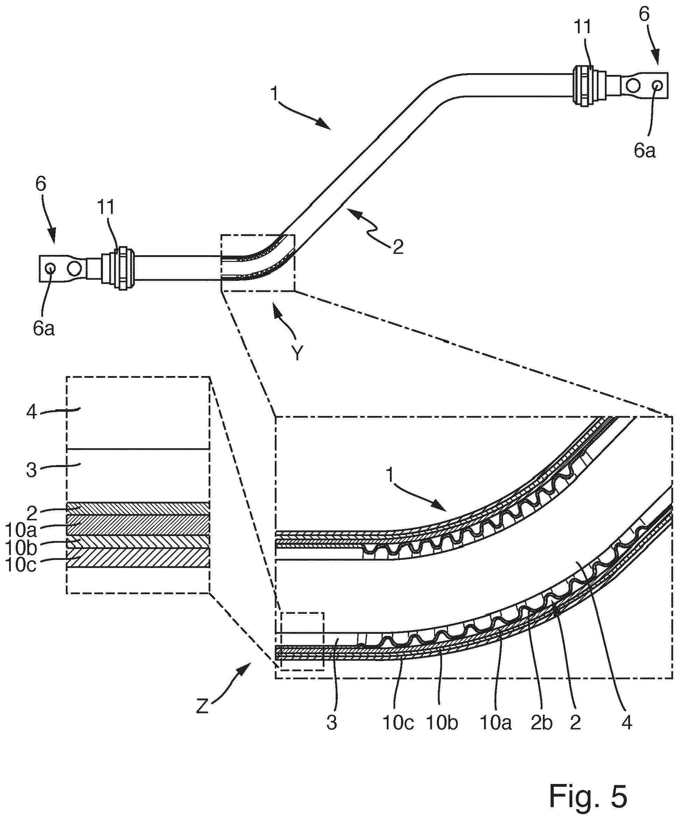

Figur 5 zeigt zunächst eine komplette Stromleitungsvorrichtung 1 mit beiden Enden, die speziell identisch ausgebildet sein können, insbesondere gemäß Figur 1, wie gezeigt. Beide Enden des Fluid-Leitungselements 2 sind hier zusammen mit der Litze 4 flachgepresst nach Art eines (Press-)Kabelschuhs 6 und weisen einen Durchbruch 6a auf zum Ausbilden einer Schraubverbindung mit einem elektrischen Anschluss, wie der Anschlussplatte 9, vgl. Figuren 1 bis 4.

Bei Bezugszeichen Y ist ein Schnitt durch das Fluid-Leitungselement 2 und die weiteren Bestandteile der Stromleitungsvorrichtung 1 gezeigt, um die Abfolge der einzelnen Schichten bzw. Komponenten darzustellen. Man erkennt, von au-ßen nach innen: Isolierung 10c, Abschirmung 10b, Isolierung 10a, Rohr bzw. Fluid-Leitungselement 2 (teilweise gewellt, 2b), Freiraum 3 und Litze 4. Dies ist bei Bezugszeichen Z nochmals vergrößert dargestellt.

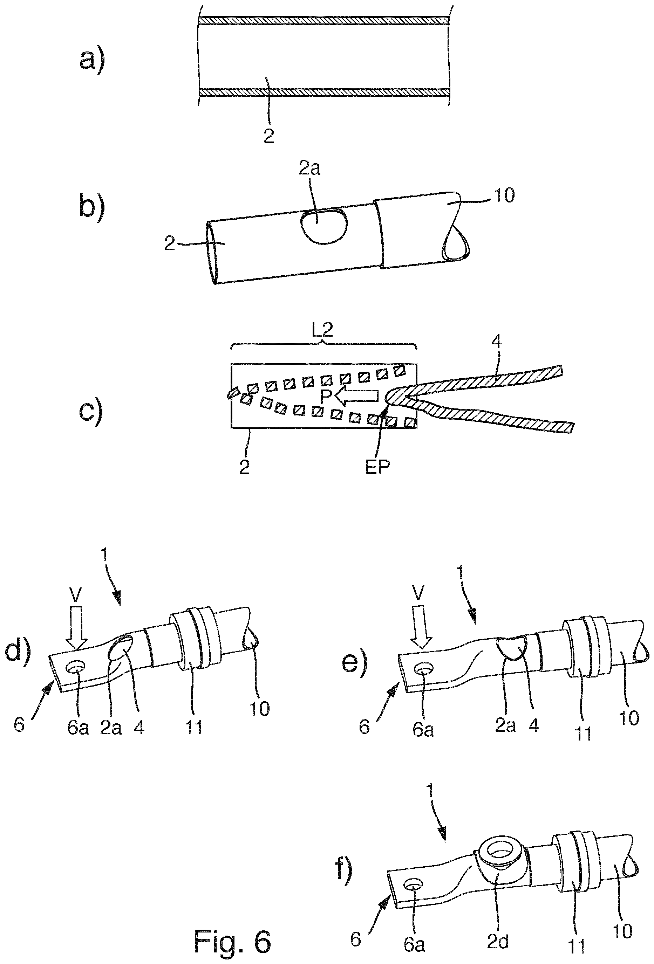

Figur 6 verdeutlicht mehrere Schritte a) bis f) eines erfindungsgemäßen Herstellungsverfahrens für die Stromleitungsvorrichtung 1:
Das Verfahren zur Herstellung einer temperierbaren Stromleitungsvorrichtung 1, vgl. Figuren 1 bis 5, beinhaltet:
Schritt a) Herstellen eines rohrförmigen Fluid-Leitungselements 2 aus einem elektrisch leitfähigen Werkstoff, insbesondere Metall, vorzugsweise Kupfer oder Aluminium einschließlich entsprechender Legierungen, insbesondere indem zunächst wird durch Biegen oder Walzen von entsprechendem Blech ein Hohlkörper hergestellt wird, der dann an den Stößen per Längsnaht verschweißt wird.

Anschließend kann optional wenigstens ein gewellter Abschnitt des Fluid-Leitungselements 2 hergestellt werden, wie in den Figuren 2, 4 und 5 gezeigt (Bezugszeichen 2b), insbesondere durch Druckeinwirkung von außen (z.B. mechanisch) oder von innen (per Fluiddruck). Dann wird das Rohr 2 vorzugsweise gereinigt.

Dann wird, wie in Schritt b) erkennbar, die EMV-Abschirmung 10 (ggf. mit Kabeldurchführungselement 11, vgl. Figuren 1 bis 5) angebracht, insbesondere wie oben beschrieben. Außerdem erfolgt ein Ablängen des Fluid-Leitungselements 2 einschließlich der EMV-Abschirmung 10 auf eine gewünschte Länge L2, vgl. Schritt c). Weiterhin ist in Schritt b) bezeigt, dass eine Öffnung 2a in dem Fluid-Leitungselement 2 erzeugt wurde, welche Öffnung 2a an einem Ende des Fluid-Leitungselements 2 angeordnet ist, indem ein Durchbruch in einer Wandung 2c des Fluid-Leitungselements 2 durch Ausstanzen erzeugt wurde. Je nach gewünschter Ausgestaltung (vgl. Figuren 1 und 2 bzw. 3 und 4) wird eine Entfernung des Durchbruchs vom Ende des Fluid-Leitungselements 2 geeignet gewählt.

In Schritt c) erfolgt das Einbringen einer Litze 4 mit mehreren Litzendrähten, vorzugsweise aus Kupfer, deren Länge einer gewünschten Länge L2 der Stromleitungsvorrichtung 1 entspricht, in das Fluid-Leitungselement 2.

Dies geschieht bevorzugt, indem Verfahren ein Litzenabschnitt mit einer Länge bereitgestellt wird, welche Länge doppelt so groß ist wie die Länge L2 der Stromleitungsvorrichtung 1 bzw. des Fluid-Leitungselements 2. Dann wird der Litzenabschnitt bei einem Ergreifpunkt EP in seiner Mitte durch ein geeignetes Werkzeug (nicht gezeigt) ergriffen und in das Fluid-Leitungselement 2 durch ein offenes Ende desselben beginnend mit dem Ergreifpunkt EP eingezogen (Pfeil P).

Alternativ kann die Litze 4 in das Fluid-Leitungselement 2 bei dessen Herstellung in Schritt a) eingelegt und gemeinsam mit diesem abgelängt werden.

In Schritt d) (vgl. Figuren 1 und 2) bzw. Schritt e) (vgl. Figuren 3 und 4) werden Rohrende und Litze 4 nach Art eines Kabelschuhs 6 verpresst, wie schon beschrieben (Pfeil V); vorzugsweise wird im selben Arbeitsschritt auch der Durchbruch 6a (vgl. Figur 5) zum Ausbilden einer Schraubverbindung mit einem elektrischen Anschluss ausgebildet.

Im Anschluss an Schritt e) wird in Schritt f) noch der Sattelstutzen 2d gemäß den Figuren 3 und 4 angebracht, der insbesondere aus einem Kunststoff bestehen kann.

Dabei erfolgt jeweils in Schritt d) beim Verpressen ein Anlegen der Litze 4 bzw. der Litzendrähte in dem jeweiligen Anschlussbereich an das Fluid-Leitungselement 2, vorzugsweise in jeweils einem Anschlussbereich an jedem Ende des Fluid-Leitungselements 2.

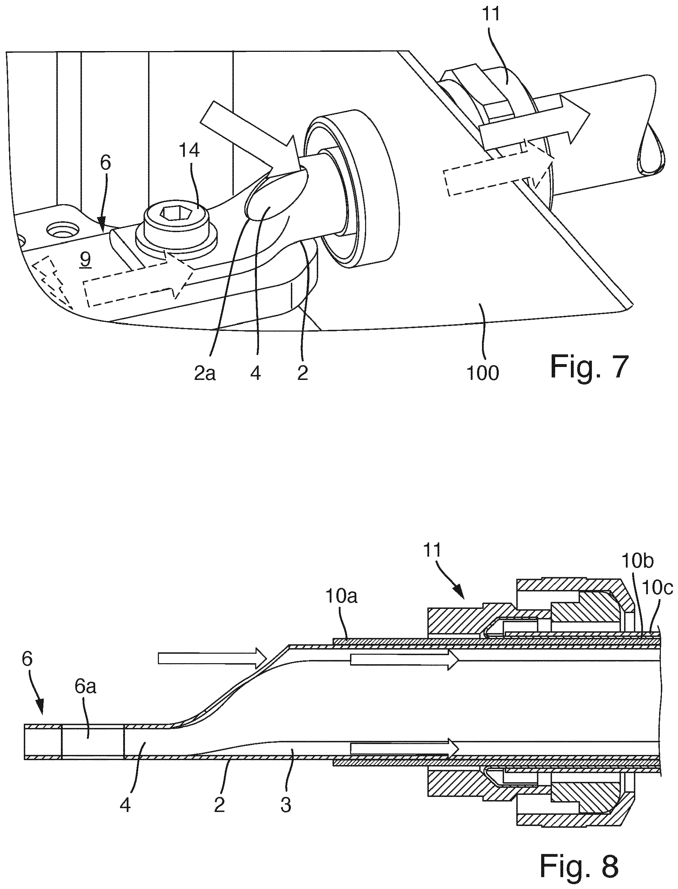

In Figur 7 ist die Stromleitungsvorrichtung gemäß Figur 6 d) nach Anschluss an ein Gehäuse 100 (über das Kabeldurchführungselement 11) und Schraubanbindung bei Bezugszeichen 14 (über den Durchbruch 6a) an die Anschlussplatte 9 gezeigt.

Die gestrichelten Pfeile symbolisieren den Stromfluss (über Anschlussplatte 9, Kabelschuh 6, Litze 4 und Rohr 2), während die durchgezogenen Pfeile den Strom des Temperierfluids (hier bevorzugt Druckluft) anzeigen (durch die Öffnung 2a in/durch den Freiraum 3 (vgl. Figur 5) im Inneren des Rohres 2).

Figur 8 zeigt die zugehörige Längsschnitt-Ansicht (ohne Gehäuse, Schraube und Anschlussplatte). Auf die Details des Kabeldurchführungselements 11 ist hier nicht weiter einzugehen.

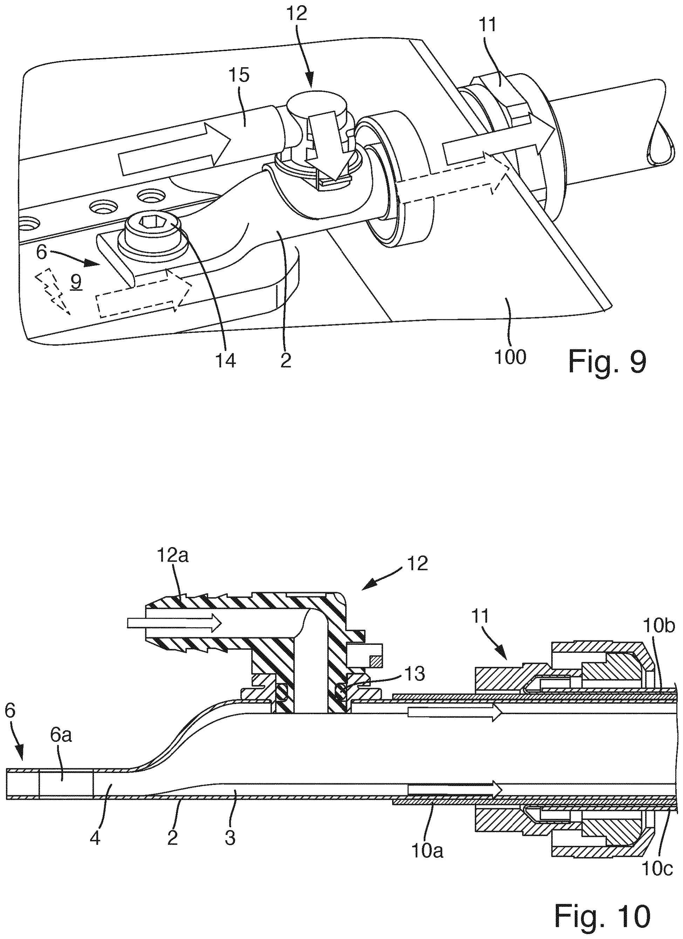

In Figur 9 ist die Stromleitungsvorrichtung gemäß Figur 6 f) nach Anschluss an ein Gehäuse 100 (über das Kabeldurchführungselement 11) und Schraubanbindung bei Bezugszeichen 14 (über den Durchbruch 6a) an die Anschlussplatte 9 gezeigt. Außerdem wurde das Verbindungselement 12 über das Anschlussteil 12a (vgl. Figuren 3 und 4) an eine Temperierfluid-Leitung 15 angeschlossen.

Die gestrichelten Pfeile symbolisieren erneut den Stromfluss (über Anschlussplatte 9, Kabelschuh 6, Litze (nicht sichtbar) und Rohr 2), während die durchgezogenen Pfeile den Strom des Temperierfluids (hier bevorzugt ein dielektrisches Öl) anzeigen (über das Verbindungselement 12 durch das Innere des Rohres 2).

Figur 10 zeigt die zugehörige Längsschnitt-Ansicht (ohne Gehäuse, Schraube und Anschlussplatte). Auf die Details des Kabeldurchführungselements 11 ist auch hier nicht weiter einzugehen.

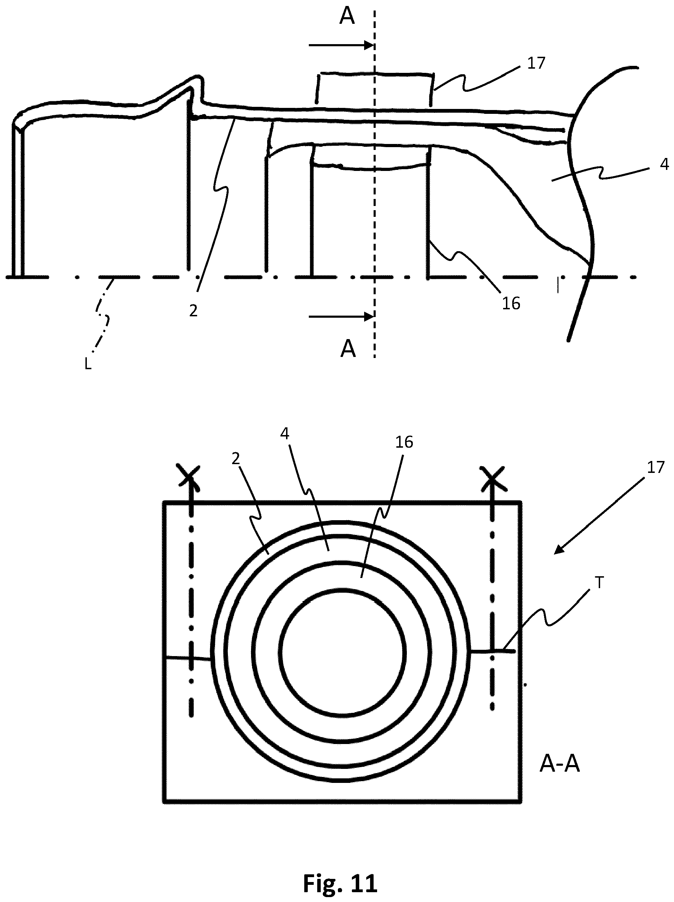

Figur 11 zeigt eine alternative Ausgestaltung der Stromleitungsvorrichtung 1 an (einem) Anschlussende, oben im Längsschnitt, darunter im Querschnitt entlang der Linie A-A.

Das Rohr 2 ist an dem gezeigten Ende nach Art eines Fluid-Anschlussstutzens speziell vom Typ VDA ausgebildet. Die Litze 4 ist etwas kürzer als das Rohr 2 und mittels eines innenliegenden Spannrings 16 oder dgl. von innen an das Rohr 2 angelegt (angepresst; entweder einseitig oder umfänglich aufgefächert). L bezeichnet die Längsachse. Außen ist im Bereich des Spannringrings 16 ein bei Bezugszeichen T in zwei Hälften trennbares elektrisches Anschlussteil 17 angeordnet, welches zugleich zum Halten des Rohres 2 ausgebildet sein kann. Der Anschluss für das Temperierfluid wird dann einfach auf das freie Ende des Rohes 2 aufgesteckt bzw. aufgeschoben (von links in Figur 11, oben). Somit bildet die Mündung des Anschlussstutzens (links in Figur 11, oben) eine betreffende Öffnung des Fluid-Leitungselements 2.

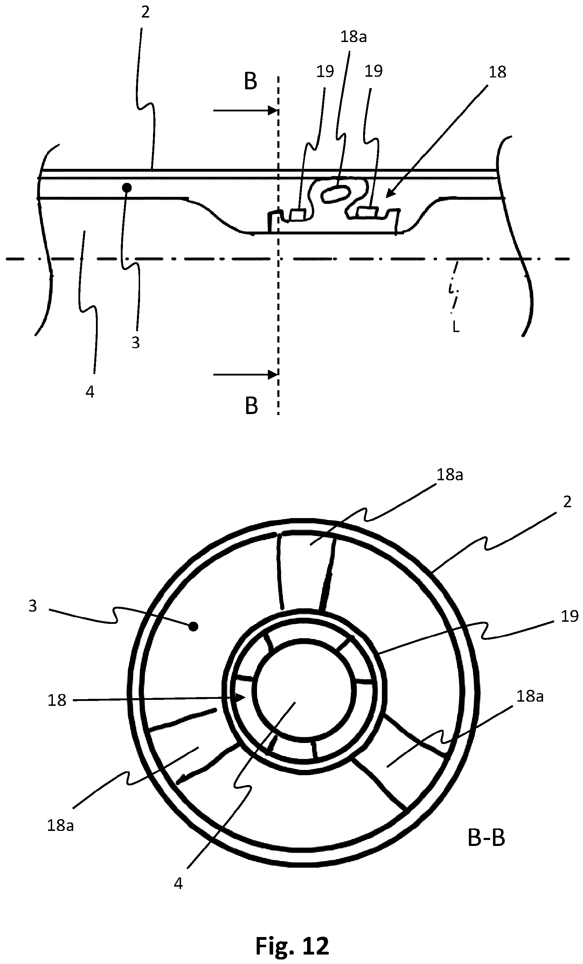

Figur 12 zeigt eine Möglichkeit der Führung der Litze 4 im Innern des Rohres 2, oben im Längsschnitt, darunter im Querschnitt entlang der Linie B-B.

Zwischen dem Fluid-Leitungselement (Rohr) 2 und der Litze 4 ist wenigstens ein Abstandhalter 18 angeordnet, der als ein ringförmiger Abstandhalter 18 mit (hier ohne Beschränkung drei) umfänglich beabstandeten Vorsprüngen 18a ausgebildet ist, welche Vorsprünge 18a von innen mit dem Rohr 2 wechselwirken. Der Abstandhalter 18 ist mittels Kabelbinder 19 oder dgl. auf der Litze 4 gehalten und verringert deren Querschnitt, wobei die Litze 4 auf das Zentrum der Anordnung entlang der Längsachse L fixiert ist. Zwischen den Vorsprüngen 18a kann das Temperierfluid ungehindert strömen.

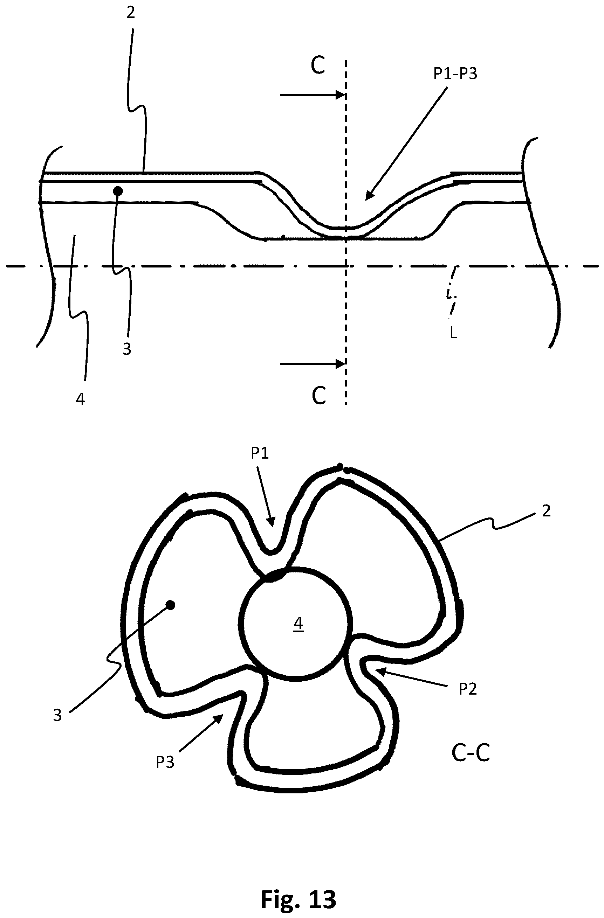

Figur 13 zeigt eine weitere Möglichkeit der Führung der Litze 4 im Innern des Rohres 2, oben im Längsschnitt, darunter im Querschnitt entlang der Linie C-C.

Bei der gezeigten Stromleitungsvorrichtung 1 sind die Litzendrähte in wenigstens einem Abschnitt miteinander verbunden, vorzugsweise stoffschlüssig, z.B. durch Ultraschallschweißen, sodass die Litze 4 in dem Abschnitt einen verringerten Querschnitt aufweist, vgl. die Schnittebene C-C. Das Fluid-Leitungselement 2 ist in dem genannten Abschnitt an mehreren, in Umfangsrichtung voneinander beabstandeten Positionen P1-P3, vorzugsweise mindestens drei gleichmäßig voneinander beabstandeten Positionen P1-P3, gegen die Litze 4 verpresst, wobei höchst vorzugsweise Fluid-Leitungselement 2 und Litze 4 bei den genannten Positionen P1-P3 zusätzlich stoffschlüssig verbunden sind.

Auch bei der Ausgestaltung gemäß Figur 12 ist es vorteilhaft, wenn die Litzendrähte der Litze 4 vor Anbringen des Abstandhalters 18 in dem betreffenden Abschnitt miteinander verbunden werden, vorzugsweise stoffschlüssig, z.B. durch Ultraschallschweißen, sodass die Litze 4 in dem Abschnitt einen verringerten Querschnitt aufweist.

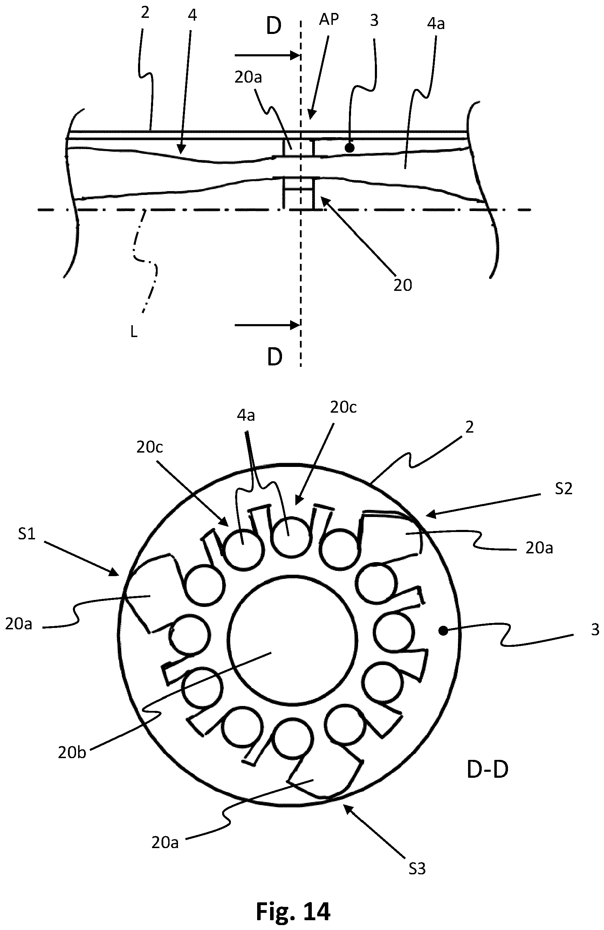

Figur 14 zeigt noch eine weitere Möglichkeit der Führung der Litze 4 im Innern des Rohres 2, oben im Längsschnitt, darunter im Querschnitt entlang der Linie D-D.

Bei der gezeigten Stromleitungsvorrichtung sind die einzelnen Litzendrähte (oder Bündel von Litzendrähten) 4a an wenigstens einem ringförmigen Halteelement 20 gehalten, das bei einer axialen Position AP in das Fluid-Leitungselement 2 eingesetzt ist und sich an mehreren, über den Umfang verteilten Stellen S1-S3 mit entsprechenden Vorsprüngen 20a von innen an dem Fluid-Leitungselement 2 abstützt. Das Halteelement 20 ist vorzugsweise in einem elastischen Kunststoff ausgebildet und weist einen zentralen Durchbruch 20b zur Fluiddurchleitung auf. Es besitzt an seiner Außenseite eine Mehrzahl von Aufnahmen oder Vertiefungen 20c (nur teilweise bezeichnet) für einzelne Litzendrähte (oder Litzendrahtbündel) 4a, um diese in Position zu halten.

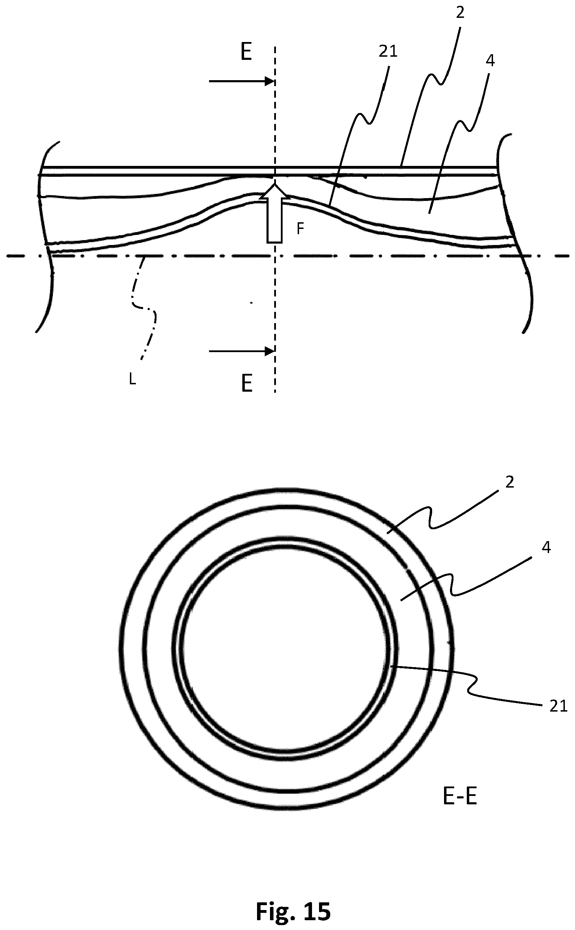

Figur 15 zeigt abschließend eine wieder andere Möglichkeit der Führung der Litze 4 im Innern des Rohres 2, oben im Längsschnitt, darunter im Querschnitt entlang der Linie E-E.

Bei der gezeigten Stromleitungsvorrichtung ist in dem Fluid-Leitungselement 2 zumindest in einem Bereich ein hülsenförmiges elastisches Element 21 eingesetzt, welches Element 21 lokal eine Kraft F nach außen gegen eine Innenseite des Fluid-Leitungselements 2 ausübt und so die Litze 4 oder die einzelnen Litzendrähte (oder Bündel von Litzendrähten) an der Innenseite des Fluid-Leitungselements 2 in Anlage bringt. Das elastische Element 21 besteht vorzugsweise aus einer Formgedächtnislegierung oder ist als Geflechthülse aus Federstahl ausgebildet, vorzugsweise nach Art eines Stents, wie aus der Medizintechnik grundsätzlich bekannt.

Grundsätzlich lassen sich die Ausgestaltungen gemäß den Figuren 12 ff bei allen Stromleitungsvorrichtungen 1 gemäß den Figuren 1 bis 11 einsetzen, ggf. auch in Kombination.

## Patentansprüche

1. Temperierbare Stromleitungsvorrichtung (1), aufweisend:
ein rohrförmiges Fluid-Leitungselement (2) aus einem elektrisch leitfähigen Werkstoff, insbesondere Metall, vorzugsweise Kupfer oder Aluminium einschließlich entsprechender Legierungen;
wenigstens zwei Öffnungen (2a, 2a`) des Fluid-Leitungselements (2), welche Öffnungen (2a, 2a`) vorzugsweise an verschiedenen Enden des Fluid-Leitungselements (2) angeordnet sind; und
einen Freiraum (3) innerhalb des Fluid-Leitungselements (2), welcher Freiraum (3) eine fluidleitende Verbindung zwischen den beiden Öffnungen (2a, 2a`) schafft;
**dadurch gekennzeichnet, dass**
in dem Fluid-Leitungselement (2) eine Litze (4) mit mehreren Litzendrähten, vorzugsweise aus Kupfer, geführt ist;
der Freiraum (3) sich zumindest in Bereichen längs des Fluid-Leitungselements (2) um die Litze (4) herum erstreckt; und
die Litze (4) oder die Litzendrähte in wenigstens einem Anschlussbereich an das Fluid-Leitungselement (2) angelegt ist bzw. sind, vorzugsweise angepresst, oder umgekehrt.

2. Stromleitungsvorrichtung (1) nach Anspruch 1, bei der wenigstens ein Ende des Fluid-Leitungselements (2) zusammen mit der Litze (4) flachgepresst ist, vorzugsweise nach Art eines Presskabelschuhs (6), und höchst vorzugsweise einen Durchbruch (6a) zum Ausbilden einer Schraubanbindung aufweist.

3. Stromleitungsvorrichtung (1) nach Anspruch 1 oder 2, bei der wenigstens eine der Öffnungen (2a, 2a`) in einer Wandung (2c) des Fluid-Leitungselements (2) in einem Übergangsbereich angeordnet ist, welcher Übergangsbereich zwischen dem flachgepressten Ende und einem unverformten Bereich des Fluid-Leitungselements (2) angeordnet ist; oder wenigstens eine der Öffnungen (2a, 2a`) in einer Wandung (2c) des Fluid-Leitungselements (2) in einem unverformten Bereich des Fluid-Leitungselements (2) angeordnet ist, wobei vorzugsweise an der wenigstens einen Öffnung (2a, 2a`) ein Verbindungselement (12) zum Anschließen einer Temperierfluid-Leitung (15) angeordnet ist, höchst vorzugsweise in Form eines sattelförmigen Verbindungsteils (2d) mit abgewinkeltem Anschlussteil (12a), welches Anschlussteil (12a) sich bevorzugt parallel zu dem Fluid-Leitungselement (2) erstreckt.

4. Stromleitungsvorrichtung (1) nach einem der Ansprüche 1 bis 3, bei der die Litze (4) oder die Litzendrähte an wenigstens einem Ende des Fluid-Leitungselements (2) an eine Innenseite des als normierter Fluid-Anschlussstutzen ausgebildeten Fluid-Leitungselements (2) angelegt sind, vorzugsweise mittels eines in das Fluid-Leitungselement (2) eingeführten Spannrings (16).

5. Stromleitungsvorrichtung (1) nach einem der Ansprüche 1 bis 4, bei der zwischen dem Fluid-Leitungselement (2) und der Litze (4) wenigstens ein Abstandhalter (18) angeordnet ist, vorzugsweise ein ringförmiger Abstandhalter (18) mit umfänglich beabstandeten Vorsprüngen (18a).

6. Stromleitungsvorrichtung (1) nach einem der Ansprüche 1 bis 5, bei der die Litzendrähte in wenigstens einem Abschnitt miteinander verbunden sind, vorzugsweise stoffschlüssig, sodass die Litze (4) in dem Abschnitt einen verringerten Querschnitt aufweist, und bei der das Fluid-Leitungselement (2) in dem genannten Abschnitt an mehreren, in Umfangsrichtung voneinander beabstandeten Positionen (P1-P3), vorzugsweise mindestens drei gleichmäßig voneinander beabstandeten Positionen (P1-P3), gegen die Litze (4) verpresst ist, wobei höchst vorzugsweise Fluid-Leitungselement (2) und Litze (4) bei den genannten Positionen (P1-P3) zusätzlich stoffschlüssig verbunden sind.

7. Stromleitungsvorrichtung (1) nach einem der Ansprüche 1 bis 6, bei der die Litzendrähte (4a) an wenigstens einem ringförmigen Halteelement (20) gehalten sind, das bei einer axialen Position (AP) in das Fluid-Leitungselement (2) eingesetzt ist und sich an mehreren Stellen (S1-S3) von innen an dem Fluid-Leitungselement (2) abstützt, welches Halteelement (20) einen zentralen Durchbruch (20b) zur Fluiddurchleitung und vorzugsweise an seiner Außenseite eine Mehrzahl von Aufnahmen (20c) für einzelne Litzendrähte (4a) aufweist.

8. Stromleitungsvorrichtung (1) nach einem der Ansprüche 1 bis 7, bei der in dem Fluid-Leitungselement (2) in einem Bereich ein elastisches Element (21) eingesetzt ist, welches Element (21) lokal eine Kraft (F) nach außen gegen eine Innenseite des Fluid-Leitungselements (2) ausübt und die Litzendrähte an der Innenseite in Anlage bringt; und
vorzugsweise das elastische Element (21) aus einer Formgedächtnislegierung besteht oder als Geflechthülse aus Federstahl ausgebildet ist, höchst vorzugsweise nach Art eines Stents.

9. Stromleitungsvorrichtung (1) nach einem der Ansprüche 1 bis 8, bei der das Fluid-Leitungselement (2) zumindest abschnittweise, bevorzugt in einem Abschnitt zwischen den beiden Öffnungen (2a, 2a`), von einer elektromagnetisch wirksamen, EMV-, Abschirmung (10) umgeben ist, welche Abschirmung (10) vorzugsweise umfasst: eine erste elektrische Isolierumhüllung (10a), die außen auf dem Fluid-Leitungselement (2) angeordnet ist; eine EMV-Abschirmschicht (10b), insbesondere aus einem Metallgeflecht; und eine zweite elektrische Isolierumhüllung (10c), die außen auf der EMV-Abschirmschicht (10b) angeordnet ist.

10. Stromleitungsvorrichtung (1) nach einem der Ansprüche 1 bis 9, bei der das Fluid-Leitungselement (2) zumindest in einem Abschnitt flexibel ausgebildet ist, insbesondere gewellt, vorzugsweise ringgewellt oder wendelgewellt.

11. Verfahren zur Herstellung einer temperierbaren Stromleitungsvorrichtung (1), beinhaltend:
a) Herstellen eines rohrförmigen Fluid-Leitungselements (2) aus einem elektrisch leitfähigen Werkstoff, insbesondere Metall, vorzugsweise Kupfer oder Aluminium einschließlich entsprechender Legierungen, insbesondere indem zunächst wird durch Biegen oder Walzen von Blech ein Hohlkörper hergestellt wird, der dann an den Stößen verschweißt wird;
b) optional Ausbilden wenigstens eines gewellten Abschnitts des Fluid-Leitungselements (2), insbesondere durch Druckeinwirkung von au-ßen oder von innen;
c) optional Reinigen des Fluid-Leitungselements (2);
d) optional Anbringen einer EMV-Abschirmung (10), insbesondere mit den Merkmalen in Anspruch 9;
e) Ablängen des Fluid-Leitungselements einschließlich der optionalen EMV-Abschirmung auf eine gewünschte Länge (L2);
f) Bereitstellen von wenigstens zwei Öffnungen (2a, 2a`) in dem Fluid-Leitungselement (2), welche Öffnungen (2a, 2a`) vorzugsweise an verschiedenen Enden des Fluid-Leitungselements (2) angeordnet sind, höchst vorzugsweise durch Ausstanzen einer Wandung (2c) des Fluid-Leitungselements (2);
g) Einbringen einer Litze (4) mit mehreren Litzendrähten, vorzugsweise aus Kupfer, deren Länge der gewünschten Länge in Schritt e) entspricht, in das Fluid-Leitungselement (2); und
h) Anlegen der Litze (4) oder der Litzendrähte in wenigstens einem Anschlussbereich an das Fluid-Leitungselement (2), verzugsweise durch Anpressen, oder umgekehrt.

12. Verfahren nach Anspruch 11, bei dem
das Einbringen der Litze (4) in Schritt g) erfolgt entweder
g`) durch Einlegen der Litze (4) in das Fluid-Leitungselement (2) bei dessen Herstellung in Schritt a) und gemeinsames Ablängen in Schritt e) oder
g") durch Bereitstellen eines Litzenabschnitts mit einer Länge, die doppelt so groß ist wie die Länge (L2) des Fluid-Leitungselements (2) in Schritt e), Ergreifen des Litzenabschnitts bei einem Ergreifpunkt (EP) in seiner Mitte und Einbringen des Litzenabschnitts in das Fluid-Leitungselement (2) durch ein offenes Ende desselben beginnend mit dem Ergreifpunkt (EP).

13. Verfahren nach Anspruch 11 oder 12, bei dem wenigstens ein Ende des Fluid-Leitungselements (2) zusammen mit der Litze (4) flachgepresst wird, vorzugsweise zur Herstellung einer Art Presskabelschuh (6), und höchst vorzugsweise in dem flachgepressten Ende ein Durchbruch (6a) zum Ausbilden einer Schraubanbindung ausgebildet wird.

14. Verfahren nach einem der Ansprüche 11 bis 13, bei dem die Litzendrähte, insbesondere vor dem Einbringen in das Fluid-Leitungselement (2) in wenigstens einem Abschnitt miteinander verbunden werden, vorzugsweise stoffschlüssig, sodass die Litze (4) in dem Abschnitt einen verringerten Querschnitt aufweist, und bei der das Fluid-Leitungselement (2) nach dem Einbringen der Litze (4) in dem genannten Abschnitt an mehreren, in Umfangsrichtung voneinander beabstandeten Positionen (P1-P3), vorzugsweise an mindestens drei gleichmäßig voneinander beabstandeten Positionen (P1-P3), gegen die Litze (4) verpresst wird, wobei höchst vorzugsweise Fluid-Leitungselement (2) und Litze (4) bei den genannten Positionen (P1-P3) zusätzlich stoffschlüssig verbunden werden.

15. Verfahren zum Temperieren einer Stromleitung, beinhaltend:
a) Bereitstellen einer Stromleitungsvorrichtung (1) nach einem der Ansprüche 1 bis 10;
b) elektrisches Kontaktieren der Stromleitungsvorrichtung (1) in dem Anschlussbereich;
c) Leiten eines Temperierfluids, insbesondere Luft oder Öl, durch das Fluid-Leitungselement (2) über die Öffnungen (2a, 2a`);
wobei vorzugsweise das Temperierfluid in Form von Luft oder einem anderen Gas unmittelbar durch die Öffnungen (2a, 2a`)in das Fluid-Leitungselement (2) eingeleitet und aus dem Fluid-Leitungselement (2) ausgeleitet wird; oder
wobei vorzugsweise eine Temperierfluid-Leitung (15) mit einem insbesondere flüssigen Temperierfluid an ein an wenigstens einer Öffnung (2a, 2a`) angeordnetes Verbindungselement (12) angeschlossen und das Temperierfluid durch das Verbindungselement (12) in das Fluid-Leitungselement (2) eingeleitet oder aus dem Fluid-Leitungselement (2) ausgeleitet wird.
